# EUROPÄISCHE PATENTSCHRIFT

(11) **EP 3 390 001 B1**
(45) Veröffentlichungstag und Bekanntmachung des Hinweises auf die Patenterteilung: **14.04.2021**
(21) Anmeldenummer: 16805434.4
(22) Anmeldetag: 02.12.2016
(51) Int. Cl.: B29C 64/364, B29C 64/153, B22F 3/105

(54) **VORRICHTUNG ZUR GENERATIVEN HERSTELLUNG EINES DREIDIMENSIONALEN OBJEKTS UND ENTSPRECHENDES HERSTELLUNGSVERFAHREN**
DEVICE FOR THE GENERATIVE PRODUCTION OF A THREE-DIMENSIONAL OBJECT AND CORRESPONDING PRODUCTION METHOD
DISPOSITIF DE FABRICATION ADDITIVE D'UN OBJET TRIDIMENSIONNEL ET PROCÉDÉ CORRESPONDANT

(30) Priorität: 14.12.2015 DE 102015121748
(43) Veröffentlichungstag der Anmeldung: 24.10.2018
(73) Patentinhaber: CL Schutzrechtsverwaltungs GmbH, 96215 Lichtenfels (DE)
(72) Erfinder: HERZOG, Frank, 96215 Lichtenfels (DE)
(74) Vertreter: Hafner & Kohl PartmbB
(86) Internationale Anmeldenummer: PCT/EP2016/079609
(87) Internationale Veröffentlichungsnummer: WO 2017/102384

(56) Entgegenhaltungen:
- WO-A1-2009/072935
- DE-A1-102014 000 022
- JP-B1- 5 721 887
- US-A1- 2006 192 322
- US-A1- 2013 193 620

## Beschreibung

Die Erfindung betrifft eine Vorrichtung zur generativen Herstellung eines dreidimensionalen Objekts durch sukzessive schichtweise selektive Verfestigung von Baumaterialschichten aus verfestigbarem Baumaterial vermittels wenigstens eines Energiestrahls, umfassend wenigstens eine Einrichtung zur Erzeugung wenigstens eines Energiestrahls zur schichtweisen selektiven Verfestigung einzelner Baumaterialschichten aus verfestigbarem Baumaterial, und eine Strömungseinrichtung zur Erzeugung einer eine Prozesskammer der Vorrichtung zumindest abschnittsweise durchströmenden Fluidströmung.

Derartige Vorrichtungen sind zur generativen Herstellung dreidimensionaler Objekte bekannt. Vermittels entsprechenden Vorrichtungen werden dreidimensionale Objekte durch sukzessive schichtweise selektive Verfestigung von in einer Bauebene aufgebrachten Baumaterialschichten aus verfestigbarem Baumaterial in jeweiligen Querschnittsbereichen der jeweils herzustellenden Objekte entsprechenden Bereichen vermittels eines Energie- bzw. Laserstrahls generativ aufgebaut.

Es ist weiter bekannt, entsprechende Vorrichtungen mit Strömungseinrichtungen zur Erzeugung einer eine Prozesskammer der Vorrichtung zumindest abschnittsweise durchströmenden Fluidströmung auszustatten. Über entsprechende Strömungseinrichtungen erzeugte Fluidströmungen dienen insbesondere dazu, die bei der im Rahmen generativer Bauprozesse erfolgenden selektiven Verfestigung einzelner Baumaterialschichten entstehenden Prozessgase, d. h. z. B. Schmauch- oder Rauchgase, aus der Prozesskammer abzuführen. JP5721887B1 und US2013/193620 offenbaren Vorrichtungen zur generativen Herstellung dreidimensionaler Objekte.

Es besteht ein Bedarf dahin, den Betrieb entsprechender Strömungseinrichtungen im Hinblick auf eine verbesserte, d. h. insbesondere bedarfsgerecht anpassbare, Erzeugung entsprechender Fluidströmungen weiterzuentwickeln.

Der Erfindung liegt die Aufgabe zugrunde, eine verbesserte Vorrichtung zur generativen Herstellung dreidimensionaler Objekte anzugeben.

Die Aufgabe wird durch eine Vorrichtung gemäß Anspruch 1 gelöst. Die abhängigen Ansprüche betreffen besondere Ausführungsformen der Vorrichtung. Die Aufgabe wird ferner durch ein Verfahren gemäß Anspruch 12 gelöst.

Die hierin beschriebene Vorrichtung dient im Allgemeinen der additiven bzw. generativen Herstellung wenigstens eines dreidimensionalen Objekts, d. h. beispielsweise eines technischen Bauteils bzw. einer technischen Bauteilgruppe, durch sukzessives schichtweises selektives Verfestigen einzelner Baumaterialschichten aus einem verfestigbaren Baumaterial vermittels wenigstens eines von wenigstens einer Energiestrahlerzeugungseinrichtung erzeugten Energiestrahls. Bei dem Energiestrahl kann es sich um einen Laserstrahl handeln, bei der Vorrichtung kann es sich entsprechend um eine Vorrichtung zur Durchführung selektiver Laserschmelzverfahren (SLM-Verfahren) oder selektiver Lasersinterverfahren (SLS-Verfahren) handeln.

Die sukzessive schichtweise selektive Verfestigung jeweils zu verfestigender Baumaterialschichten erfolgt auf Grundlage von objektbezogenen Baudaten. Entsprechende Baudaten beschreiben im Allgemeinen die geometrisch-konstruktive Gestalt des generativ herzustellenden dreidimensionalen Objekts (im Weiteren abgekürzt als "Objekt" bezeichnet). Entsprechende Baudaten können beispielsweise CAD-Daten des herzustellenden Objekts sein bzw. solche beinhalten.

Die Vorrichtung umfasst die typischerweise erforderlichen Funktionskomponenten zur Durchführung generativer Bauprozesse, d. h. insbesondere eine Energiestrahlerzeugungseinrichtung, welche zur Erzeugung wenigstens eines Energiestrahls zur sukzessiven schichtweisen selektiven Verfestigung einzelner Baumaterialschichten aus einem verfestigbaren Baumaterial, d. h. insbesondere einem pulverförmigen Metall-, Kunststoff- und/oder Keramikmaterial, eingerichtet ist, und eine Beschichtereinrichtung, welche zur Ausbildung zu verfestigender Baumaterialschichten in einer Bauebene eingerichtet ist.

Bei einer Bauebene kann es sich um eine Oberfläche eines, typischerweise (in vertikaler Richtung) bewegbar gelagerten, Trägerelements einer Trägereinrichtung oder um eine bereits selektiv verfestigte Baumaterialschicht handeln. Im Allgemeinen sind in einer Bauebene selektiv zu verfestigende bzw. selektiv verfestigte Baumaterialschichten ausgebildet.

Die Vorrichtung umfasst eine Strömungseinrichtung, welche zur Erzeugung einer eine Bau- oder Prozesskammer der Vorrichtung, in welcher Bau- oder Prozesskammer generative Bauprozesse durchgeführt werden, zumindest abschnittsweise durchströmenden Fluidströmung eingerichtet ist. Die Strömungseinrichtung dient insbesondere dazu, die bei der im Rahmen generativer Bauprozesse erfolgenden selektiven Verfestigung von Baumaterialschichten entstehenden Prozessgase, d. h. insbesondere Schmauch- oder Rauchgase, in einer entsprechenden Fluidströmung aus der Prozesskammer der Vorrichtung abzuführen. Die Strömungseinrichtung kann zur Erzeugung einer entsprechenden Fluidströmung z. B. als eine Gebläseeinrichtung ausgebildet sein oder wenigstens eine solche umfassen. Bei der von der Strömungseinrichtung erzeugbaren Fluidströmung kann es sich demnach z. B. um eine Gebläseströmung handeln.

Die Fluidströmung wird durch wenigstens ein Strömungsfluid gebildet; bei dem die Fluidströmung bildenden Strömungsfluid handelt es sich typischerweise um ein Inertgas(gemisch), z. B. auf Basis von Argon, Stickstoff, Kohlenstoffdioxid, etc. Demnach handelt es bei einer entsprechenden Fluidströmung typischerweise um eine Inertgasströmung.

Es ist denkbar, dass die Vorrichtung ferner eine Absaugeinrichtung umfasst, welche dazu eingerichtet ist, eine aus der Prozesskammer abzuführende Fluidströmung aus der Prozesskammer abzusaugen. Die Absaugeinrichtung kann demnach zur Erzeugung einer Saugströmung eingerichtet sein.

Die Vorrichtung umfasst weiterhin eine Erfassungseinrichtung, welche zur Erfassung einer wenigstens einen physikalischen Parameter und/oder wenigstens einen chemischen Parameter der Fluidströmung angebenden oder beschreibenden Strömungsinformation eingerichtet ist. Auf Grundlage der vermittels der Erfassungseinrichtung erfassten Strömungsinformation sind sonach unterschiedliche physikalische und/oder chemische Informationen über die Fluidströmung erhältlich.

Wie erwähnt, beschreibt die Strömungsinformation unterschiedliche physikalische und/oder chemische Parameter der Fluidströmung. Die Strömungsinformation kann als physikalische Parameter der Fluidströmung bzw. des Strömungsfluids insbesondere Dichte, Druck, Temperatur der Fluidströmung sowie diverse Strömungsparameter, d. h. insbesondere die Art der Strömung (zur Beurteilung der Frage, ob eine laminare oder turbulente Strömung vorliegt), die Strömungsgeschwindigkeit, das auf eine bestimmte Strömungs(querschnitts)fläche bezogene Strömungsprofil, beschreiben. Die physikalischen Parameter können durch die Strömungsinformation unmittelbar oder mittelbar, d. h. über eine in die jeweilig zu beschreibende Größe umwandelbare Zwischengröße, beschrieben sein. Über die physikalischen Parameter lassen sich Rückschlüsse z. B. auf die Effizienz der Abführung der im Rahmen generativer Bauprozesse entstehenden Prozessgase aus der Prozesskammer der Vorrichtung ziehen. Eine in ihrem Strömungsverlauf ansteigende Dichte oder Temperatur der Fluidströmung bzw. des Strömungsfluids kann z. B. auf die Ansammlung entsprechender Prozessgase in dem Strömungsfluid und somit auf eine effiziente Abführung dieser aus der Prozesskammer hinweisen.

Die Strömungsinformation kann als chemische Parameter der Fluidströmung bzw. des Strömungsfluids insbesondere die anteilsmäßige chemische Zusammensetzung der Fluidströmung bzw. des Strömungsfluids beschreiben. Die chemischen Parameter können durch die Strömungsinformation unmittelbar oder mittelbar, d. h. über eine in die jeweilig zu beschreibende Größe umwandelbare Zwischengröße, beschrieben sein. Über die chemischen Parameter lassen sich ebenso Rückschlüsse auf die Effizienz der Abführung der im Rahmen generativer Bauprozesse entstehenden Prozessgase aus der Prozesskammer der Vorrichtung ziehen. Eine in ihrem Strömungsverlauf veränderliche anteilsmäßige chemische Zusammensetzung der Fluidströmung bzw. des Strömungsfluids in Form einer Erhöhung des Anteils entsprechender Prozessgasbestandteile kann z. B. auf die Ansammlung entsprechender Prozessgase in der Fluidströmung bzw. in dem Strömungsfluid und somit auf eine effiziente Abführung dieser aus der Prozesskammer hinweisen.

In jedem Fall ist durch die Erfassung der Strömungsinformation eine quantitative und/oder qualitative Beurteilung der Abführung entsprechender Prozessgase aus der Prozesskammer möglich. Wie sich im Weiteren ergibt, kann auf Grundlage dieser Beurteilung bedarfsgerecht eine manuelle, teil- oder vollautomatisierte Anpassung diverser Parameter der Fluidströmung respektive eine Anpassung des Betriebs der Strömungseinrichtung, gegebenenfalls auch der Betriebs eines Absaugeinrichtung, sofern vorhanden, erfolgen. Insbesondere kann ein Regel- oder Steuerkreis implementiert werden, über welchen die Abführung entsprechender Prozessgase aus der Prozesskammer im Hinblick auf eine vorgebbare oder vorgegebene Regel- oder Steuergröße geregelt bzw. gesteuert wird.

Die Vorrichtung kann eine Ausgabeeinrichtung zur Ausgabe einer Visualisierungsinformation, welche die über die Erfassungseinrichtung erfassten Strömungsinformationen visualisiert, umfassen. Erfasste Strömungsinformationen können sonach über eine entsprechende Ausgabeeinrichtung, welche z. B. als ein Display ausgebildet ist oder wenigstens ein solches umfasst, ausgegeben und einem Benutzer der Vorrichtung zur Anzeige gebracht werden. Die Visualisierungsinformation kann ein graphisches, insbesondere farbiges, Abbild einzelner, mehrerer oder sämtlicher erfasster physikalischer und/oder chemischer Parameter beinhalten. Veränderungen einzelner, mehrerer oder sämtlicher erfasster physikalischer und/oder chemischer Parameter können graphisch, insbesondere farbig, dargestellt werden. Die Darstellung von Veränderungen erfasster physikalischer und/oder chemischer Parameter kann ähnlich einem aus Wetterprognosen bekannten "Regenradar" realisiert sein; eine Visualisierung kann z. B. derart erfolgen, dass die (Strömung der) Fluidströmung durch die Prozesskammer, gegebenenfalls mit graphisch hervorgehobenem veränderlichem Prozessgasanteil, dargestellt wird.

Die Erfassungseinrichtung ist im Hinblick auf die über diese jeweils zu erfassenden physikalischen und/oder chemischen Parameter der Fluidströmung mit geeigneten, insbesondere (mess)sondenartigen, Erfassungselementen ausgestattet. Im Hinblick auf die erfassbaren bzw. zu erfassenden Parameter handelt es sich bei entsprechenden Erfassungselementen grundsätzlich um an sich bekannte Messelemente bzw. Messelementgruppen oder -anordnungen; die Erfassung der Temperatur eines Strömungsfluids kann z. B. vermittels an sich bekannter Temperaturmesselemente, die Erfassung der Strömungsgeschwindigkeit des Strömungsfluids z. B. vermittels an sich bekannter mechanisch oder optisch oder elektromagnetisch wirkender Erfassungselemente, z. B. als Bestandteil einer Durchflussmesseinrichtung, einer Laser-Doppler-Anemometrie-Einrichtung, einer Radareinrichtung, einer Ultraschalleinrichtung, etc., erfolgen.

Die über jeweilige Erfassungselemente erfassten Parameter können datenmäßig an eine der Erfassungseinrichtung zugehörige Datenverarbeitungs- oder Steuereinrichtung übertragen und dort z. B. datenmäßig aufbereitet werden, um sie einem entsprechenden Regel- oder Steuerkreis zuzuführen und in diesem verwenden zu können.

Entsprechende Erfassungselemente sind typischerweise in der Prozesskammer angeordnet. Je nach funktionellem bzw. konstruktivem Aufbau können die Erfassungselemente zumindest abschnittsweise unmittelbar in die Fluidströmung geschaltet sein, sodass die Fluidströmung diese zumindest abschnittsweise unmittelbar umströmt.

Einzelne, mehrere oder sämtliche Erfassungselemente können in wenigstens einem Bewegungsfreiheitsgrad bewegbar gelagert sein. Einzelne, mehrere oder sämtliche Erfassungselemente können z. B. zwischen einer ersten Position innerhalb der Prozesskammer, bei welcher Position es sich um eine Betriebsposition, in welcher eine Erfassung entsprechender Parameter der Fluidströmung möglich ist, handeln kann, und wenigstens einer weiteren Position innerhalb der Prozesskammer, bei welcher es sich (ebenso) um eine Betriebsposition, in welcher eine Erfassung entsprechender Parameter der Fluidströmung möglich ist, oder um eine Nicht-Betriebsposition, in welcher eine Erfassung entsprechender Parameter der Fluidströmung nicht möglich ist, handeln kann, bewegbar gelagert sein. Alternativ oder ergänzend ist es denkbar, dass einzelne, mehrere oder sämtliche Erfassungselemente zwischen einer ersten Position innerhalb der Prozesskammer, bei welcher Position es sich um eine Betriebsposition, in welcher eine Erfassung entsprechender Parameter der Fluidströmung möglich ist, handeln kann, und einer weiteren Position außerhalb der Prozesskammer, bei welcher Position es sich um eine Nicht-Betriebsposition, in welcher eine Erfassung entsprechender Parameter der Fluidströmung nicht möglich ist, handeln kann, bewegbar gelagert sind. Durch eine bewegbare Lagerung entsprechender Erfassungselemente ist es möglich, entsprechende Parameter der Fluidströmung bzw. des Strömungsfluids an unterschiedlichen Stellen innerhalb der Prozesskammer zu erfassen. Derart lässt sich z. B. eine orts- und/oder zeitaufgelöste Erfassung bzw. Beurteilung entsprechender Parameter, d. h. insbesondere auch orts- und/oder zeitaufgelöste Veränderungen jeweils erfasster Parameter, darstellen.

Bewegungen eines Erfassungselements können sowohl translatorische als auch rotatorische Bewegungsfreiheitsgrade umfassen. Selbstverständlich sind kombinierte Bewegungen in unterschiedlichen Bewegungsfreiheitsgraden möglich. Zur Realisierung entlang einer bestimmten Bewegungsbahn geführter Bewegungen eines Erfassungselements kann eine geeignete, d. h. z. B. rollen- und/oder schienenartige, Führungselemente umfassende Führungseinrichtung vorhanden sein. Die bewegbare Lagerung eines Erfassungselements kann durch einen, z. B. (elektro)motorischen, Bewegungsantrieb, vermittels welchem das Erfassungselement in wenigstens einem Bewegungsfreiheitsgrad bewegbar ist, realisiert sein.

Zweckmäßig kann wenigstens ein bewegbar gelagertes Erfassungselement gemeinsam mit wenigstens einer weiteren in wenigstens einem Bewegungsfreiheitsgrad bewegbar gelagerten Funktionskomponente der Vorrichtung bewegbar sein. Zwischen dem bewegbar gelagerten Erfassungselement und der bewegbar gelagerten Funktionskomponente der Vorrichtung besteht eine unmittelbare oder mittelbare, d. h. unter Zwischenschaltung wenigstens eines weiteren Bauteils realisierte, Bewegungskopplung. Die Bewegungskopplung resultiert typischerweise in einer gleichförmigen Bewegung des jeweiligen Erfassungselements und der Funktionskomponente. Bei einer entsprechenden Funktionskomponente kann es sich z. B. um eine relativ zu einer zu beschichtenden Bauebene bewegbar gelagerte Beschichtereinrichtung handeln.

Der Strömungseinrichtung ist wenigstens ein Diffusorelement zur Erzeugung eines gleichmäßigen oder vergleichmäßigten, insbesondere laminaren, Strömungsprofils der Fluidströmung zuordenbar oder zugeordnet. Ein entsprechendes Diffusorelement weist mehrere von einem Strömungsfluid durchströmbare Strömungsöffnungen auf. Einzelne, mehrere oder sämtliche Strömungsöffnungen können wabenartig ausgebildet und/oder angeordnet sein. Eine wabenartige Ausbildung und/oder Anordnung entsprechender Strömungsöffnungen wirkt sich positiv auf die Erzeugung eines gleichmäßigen oder vergleichmäßigten, insbesondere laminaren, Strömungsprofils der Fluidströmung aus.

Unabhängig von der konkreten konstruktiven Ausgestaltung eines Diffusorelements ist dieses in wenigstens einem Bewegungsfreiheitsgrad bewegbar gelagert. Bewegungen eines Diffusorelements können sowohl translatorische als auch rotatorische Bewegungsfreiheitsgrade umfassen. Selbstverständlich sind kombinierte Bewegungen in unterschiedlichen Bewegungsfreiheitsgraden möglich. Zur Realisierung entlang einer bestimmten Bewegungsbahn geführter Bewegungen eines Diffusorelements kann eine geeignete, d. h. z. B. rollen- und/oder schienenartige, Führungselemente umfassende Führungseinrichtung vorhanden sein. Die bewegbare Lagerung eines Diffusorelements kann durch einen, z. B. (elektro)motorischen, Bewegungsantrieb, vermittels welchem das Diffusorelement in wenigstens einem Bewegungsfreiheitsgrad bewegbar ist, realisiert sein.

Ein bewegbar gelagertes Diffusorelement kann insbesondere zwischen einer Position innerhalb der Prozesskammer, bei welcher Position es sich um eine Betriebsposition, in welcher eine Vergleichmäßigung der Fluidströmung durch das Diffusorelement möglich ist, handelt, und einer Position außerhalb der Prozesskammer, bei welcher Position es sich um eine Nicht-Betriebsposition, in welcher eine Vergleichmäßigung der Fluidströmung durch das Diffusorelement nicht möglich ist, handelt, bewegbar gelagert sein. Eine Bewegung zwischen einer entsprechenden Betriebsposition innerhalb der Prozesskammer und einer entsprechenden Nicht-Betriebsposition außerhalb der Prozesskammer kann z. B. durch eine verschiebbare Lagerung eines Diffusorelements realisiert sein; das Diffusorelement ist durch ein Einschieben in die Prozesskammer bzw. durch Herausziehen aus der Prozesskammer zwischen der Betriebsposition und der Nicht-Betriebsposition bewegbar.

Sofern die Vorrichtung mehrere Diffusorelemente umfasst, können diese in Reihe geschaltet hintereinander angeordnet sein. Zwischen zwei unmittelbar benachbart angeordneten Diffusorelementen ist ein Strömungsraum gebildet. Durch geeignete Beabstandung jeweiliger Diffusorelemente lassen sich unterschiedlich dimensionierte Strömungsräume bilden. Über die Dimensionierung entsprechender Strömungsräume kann Einfluss auf diverse Strömungsparameter, d. h. insbesondere die Art der Strömung, der Fluidströmung genommen werden.

Wenigstens ein Diffusorelement kann in wenigstens einem Bewegungsfreiheitsgrad relativ zu wenigstens einem weiteren Diffusorelement bewegbar gelagert sein, wodurch der zwischen unmittelbar benachbart angeordneten Diffusorelementen gebildete Strömungsraum in seiner Dimensionierung, insbesondere in seinem Volumen, veränderbar ist. Wie erwähnt, kann über die Dimensionierung entsprechender Strömungsräume Einfluss auf diverse Strömungsparameter, d. h. insbesondere die Art der Strömung, der Fluidströmung genommen werden.

Es wurde erwähnt, dass Bewegungen eines Diffusorelements sowohl translatorische als auch rotatorische Bewegungsfreiheitsgrade umfassen können. Selbstverständlich sind kombinierte Bewegungen in unterschiedlichen Bewegungsfreiheitsgraden möglich. Die bewegbare Lagerung eines Diffusorelements kann, wie erwähnt, durch einen, z. B. (elektro)motorischen, Bewegungsantrieb, vermittels welchem das Diffusorelement in wenigstens einem Bewegungsfreiheitsgrad bewegbar ist, realisiert sein. Zur Realisierung entlang einer bestimmten Bewegungsbahn geführter Bewegungen eines Diffusorelements kann, wie erwähnt, eine geeignete, d. h. z. B. rollen- und/oder schienenartige, Führungselemente umfassende Führungseinrichtung vorhanden sein. Insbesondere für den Fall eines eine plattenartige bzw. -förmige geometrische Grundform aufweisenden Diffusorelements ist es denkbar, dieses um eine vertikale Achse rotierbar bzw. schwenkbar zu lagern, sodass es zwischen einer Betriebsposition, in welcher entsprechende Strömungsöffnungen in Strömungsrichtung der Fluidströmung ausgerichtet sind und eine Vergleichmäßigung der Fluidströmung möglich ist, und einer Nicht-Betriebsposition, in welcher entsprechende Strömungsöffnungen nicht in Strömungsrichtung der Fluidströmung ausgerichtet sind und eine Vergleichmäßigung der Fluidströmung nicht möglich ist, verdrehbar bzw. verschwenkbar ist.

Zwischen zwei unmittelbar benachbart angeordneten Diffusorelementen gebildete Strömungsräume können grundsätzlich eine beliebige (räumliche) geometrische Gestalt aufweisen. Die (räumliche) geometrische Gestalt eines jeweiligen Strömungsraums ist eine weitere Größe zur Beeinflussung diverser Strömungsparameter der Fluidströmung.

Ein jeweiliger Strömungsraum kann (neben entsprechenden unmittelbar benachbart angeordneten Diffusorelementen ferner) durch wenigstens ein sich zwischen zwei unmittelbar benachbart angeordneten Diffusorelementen erstreckendes Wandungselement begrenzt sein. Zur weiteren räumlichen Begrenzung jeweiliger Strömungsräume können sonach sich zwischen jeweiligen Diffusorelementen erstreckend angeordnete oder ausgebildete Wandungselemente vorgesehen sein. Entsprechende Wandungselemente können in wenigstens einem Bewegungsfreiheitsgrad bewegbar relativ zueinander und/oder relativ zu wenigstens einem Diffusorelement gelagert sein.

Bewegungen eines Wandungselements können sowohl translatorische als auch rotatorische Bewegungsfreiheitsgrade umfassen. Selbstverständlich sind kombinierte Bewegungen in unterschiedlichen Bewegungsfreiheitsgraden möglich. Die bewegbare Lagerung eines Wandungselements kann durch einen, z. B. (elektro)motorischen, Bewegungsantrieb, vermittels welchem das Wandungselement in wenigstens einem Bewegungsfreiheitsgrad bewegbar ist, realisiert sein. Zur Realisierung entlang einer bestimmten Bewegungsbahn geführter Bewegungen eines Wandungselements kann eine geeignete, d. h. z. B. rollen- und/oder schienenartige, Führungselemente umfassende Führungseinrichtung vorhanden sein.

Von besonderer Zweckmäßigkeit können Kipp- bzw. Schwenkbewegungen eines Wandungselements um eine horizontale Kipp- bzw. Schwenkachse sein, da derart trichterförmig verlaufende Strömungsräume ausgebildet werden können. Über sich trichterförmig erweiterbare bzw. erweiternde oder reduzierbare bzw. reduzierende Strömungsräume lässt sich gezielt Einfluss auf diverse Strömungsparameter der Fluidströmung, insbesondere die Art der Strömung und die Strömungsgeschwindigkeit, nehmen.

Die Vorrichtung umfasst zweckmäßig eine Regel- und/oder Steuereinrichtung, welche zur Regelung bzw. Steuerung der über die Strömungseinrichtung erzeugbaren oder erzeugten Fluidströmung eingerichtet ist. Die Steuereinrichtung ist insbesondere zur Regelung bzw. Steuerung des Betriebs der Strömungseinrichtung, d. h. insbesondere zur Regelung bzw. Steuerung wenigstens eines Strömungsparameters und/oder der anteilsmäßigen Zusammensetzung des Strömungsfluids, und/oder zur Regelung bzw. Steuerung von Bewegungen bewegbar gelagerter Diffusorelemente und/oder zur Steuerung von Bewegungen bewegbar gelagerter Wandungselemente in Abhängigkeit der erfassten Strömungsinformation eingerichtet. Selbstverständlich kann die Steuereinrichtung auch zur Steuerung des Betriebs einer entsprechenden Absaugeinrichtung, sofern vorhanden, eingerichtet sein.

Die Erfindung betrifft ferner ein Verfahren zur generativen Herstellung wenigstens eines dreidimensionalen Objekts durch sukzessive schichtweise selektive Verfestigung einzelner Baumaterialschichten aus verfestigbarem Baumaterial vermittels eines Energiestrahls nach Anspruch 12. Das Verfahren zeichnet sich dadurch aus, dass zur generativen Herstellung des wenigstens einen Objekts eine wie beschriebene Vorrichtung verwendet wird. Verfahrensgemäß werden vermittels einer entsprechenden Erfassungseinrichtung entsprechende Strömungsinformationen erfasst. Sämtliche Ausführungen im Zusammenhang mit der Vorrichtung gelten analog für das Verfahren.

Die Erfindung ist anhand von Ausführungsbeispielen in den Zeichnungsfiguren näher erläutert. Dabei zeigen:

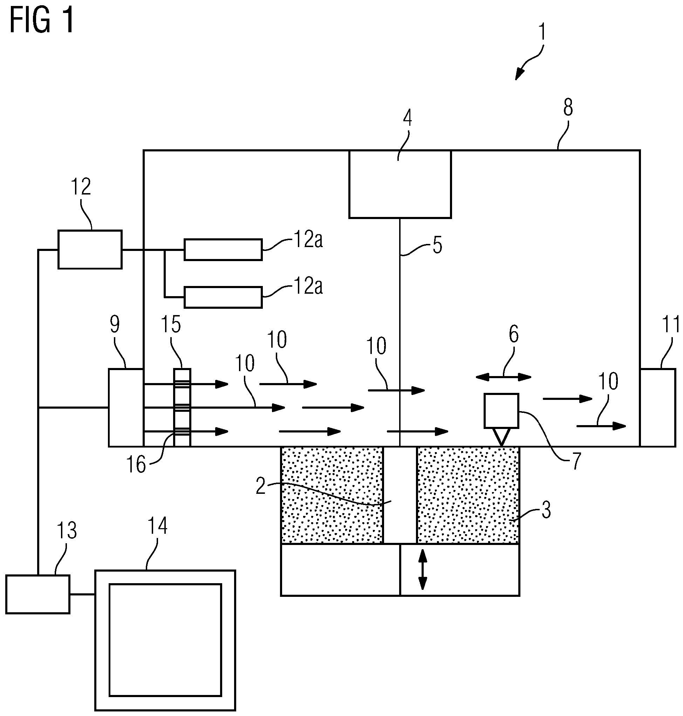

Fig. 1 - 5 je eine Prinzipdarstellung einer Vorrichtung gemäß einem Ausführungsbeispiel der Erfindung.

Fig. 1 zeigt eine Prinzipdarstellung einer Vorrichtung 1 gemäß einem Ausführungsbeispiel. Die Vorrichtung 1 dient zur generativen Herstellung dreidimensionaler Objekte 2, d. h. z. B. technischer Bauteile bzw. technischer Bauteilgruppen, durch sukzessives schichtweises selektives Verfestigen von Baumaterialschichten aus einem verfestigbaren Baumaterial 3, d. h. z. B. um ein Metallpulver, vermittels wenigstens eines von einer Energiestrahlerzeugungseinrichtung 4 erzeugten Energiestrahls 5. Die sukzessive schichtweise selektive Verfestigung jeweiliger zu verfestigender Baumaterialschichten erfolgt derart, dass von der Energiestrahlerzeugungseinrichtung 4 erzeugte Energiestrahlen 5 selektiv auf jeweils zu verfestigende, jeweiligen schichtbezogenen Querschnittsgeometrien des herzustellenden Objekts 2 entsprechende Bereiche jeweiliger Baumaterialschichten gerichtet werden.

Die Vorrichtung 1 kann als elektrische Laserschmelz-Vorrichtung oder als selektive Lasersintervorrichtung ausgebildet sein. Entsprechend kann es sich bei der Energiestrahlerzeugungseinrichtung 4 um eine Laserstrahlerzeugungseinrichtung und bei einem Energiestrahl 5 entsprechend um einen Laserstrahl handeln. Eine Laserstrahlerzeugungseinrichtung kann eine oder mehrere Laserdioden zur jeweiligen Erzeugung eines Laserstrahls umfassen. Die Laserdioden können innerhalb oder außerhalb einer Prozesskammer 8 der Vorrichtung 1 angeordnet sein. Außerhalb der Prozesskammer 8 angeordnete Laserdioden sind mit geeigneten optischen Elementen, insbesondere in Form von Fokussieroptiken, innerhalb der Prozesskammer 8, z. B. über einen Lichtleiter, optisch zu koppeln.

Jeweilige zu verfestigende Baumaterialschichten werden vermittels einer, wie durch den horizontalen Doppelpfeil 6 angedeutet, bewegbar gelagerten Beschichtereinrichtung 7 in der Prozesskammer 8 der Vorrichtung 1 gebildet.

Die Vorrichtung 1 umfasst eine Strömungseinrichtung 9, welche zur Erzeugung einer die Prozesskammer 8 durchströmenden Fluidströmung (vgl. Pfeile 10) eingerichtet ist. Die Strömungseinrichtung 9 dient insbesondere dazu, die bei der im Rahmen generativer Bauprozesse erfolgenden selektiven Verfestigung von Baumaterialschichten entstehenden Prozessgase, d. h. insbesondere Schmauch- oder Rauchgase, in einer entsprechenden Fluidströmung 10 aus der Prozesskammer 8 abzuführen. Da es sich bei einem die Fluidströmung 10 bildenden Strömungsfluid typischerweise um ein Inertgas(gemisch) handelt, dient die Strömungseinrichtung 9 insbesondere auch dazu, innerhalb der Prozesskammer 8 eine inerte Atmosphäre auszubilden bzw. aufrechtzuerhalten.

Die Strömungseinrichtung 9 kann zur Erzeugung einer entsprechenden Fluidströmung 10 z. B. als eine Gebläseeinrichtung ausgebildet sein oder wenigstens eine solche umfassen. Bei der von der Strömungseinrichtung 9 erzeugbaren Fluidströmung 10 kann es sich demnach z. B. um eine Gebläseströmung handeln.

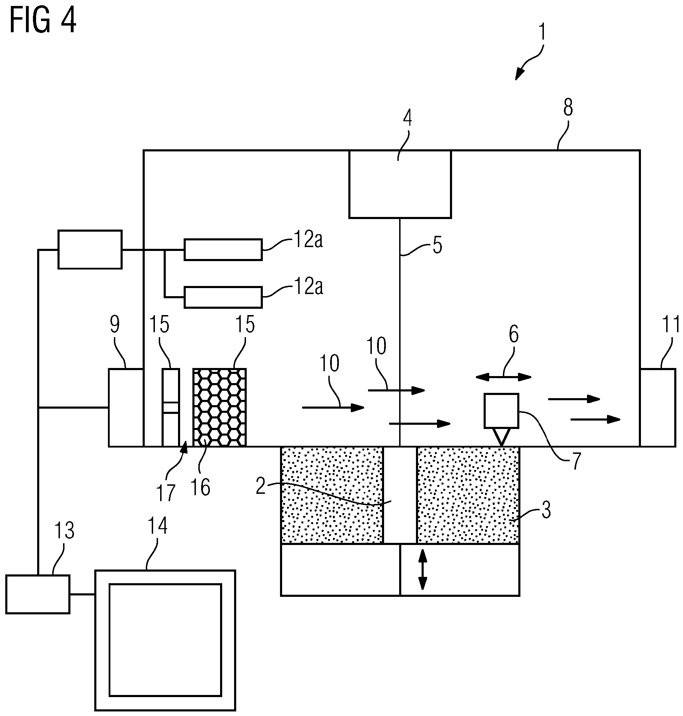

Der Strömungseinrichtung 10 ist ein Diffusorelement 15 zur Erzeugung eines gleichmäßigen oder vergleichmäßigten, insbesondere laminaren, Strömungsprofils der Fluidströmung 10 zugeordnet. Das Diffusorelement 15 weist mehrere Strömungsöffnungen 16 auf. Wenngleich in den Fig. aus Gründen der Übersichtlichkeit nicht überall dargestellt, ist jedes Diffusorelement 15 mit entsprechenden Strömungsöffnungen 16 versehen. Die Strömungsöffnungen 16 können wabenartig angeordnet und/oder ausgebildet sein (vgl. Fig. 4).

Das Diffusorelement 15 ist in wenigstens einem Bewegungsfreiheitsgrad bewegbar gelagert. Bewegungen des Diffusorelements 15 können sowohl translatorische als auch rotatorische Bewegungsfreiheitsgrade umfassen. Kombinierte Bewegungen in unterschiedlichen Bewegungsfreiheitsgraden sind möglich. Zur Realisierung entlang einer bestimmten Bewegungsbahn geführter Bewegungen des Diffusorelements 15 kann eine geeignete, d. h. z. B. rollen- und/oder schienenartige, Führungselemente (nicht gezeigt) umfassende Führungseinrichtung (nicht gezeigt) vorhanden sein. Die bewegbare Lagerung des Diffusorelements 15 kann durch einen, z. B. (elektro)motorischen, Bewegungsantrieb (nicht gezeigt), vermittels welchem das Diffusorelement 15 in wenigstens einem Bewegungsfreiheitsgrad bewegbar ist, realisiert sein.

Ein bewegbar gelagertes Diffusorelement 15 kann zwischen einer Position innerhalb der Prozesskammer 8, bei welcher Position es sich um eine Betriebsposition, in welcher eine Vergleichmäßigung der Fluidströmung 10 durch das Diffusorelement 15 möglich ist, handelt, und einer Position innerhalb oder außerhalb der Prozesskammer 8, bei welcher Position es sich um eine Nicht-Betriebsposition, in welcher eine Vergleichmäßigung der Fluidströmung 10 durch das Diffusorelement 15 nicht möglich ist, handelt, bewegbar gelagert sein. Eine Bewegung zwischen einer Betriebsposition innerhalb der Prozesskammer 8 und einer Nicht-Betriebsposition außerhalb der Prozesskammer 8 kann z. B. durch eine verschiebbare Lagerung des Diffusorelements 15 realisiert sein; das Diffusorelement 15 ist durch Einschieben in die Prozesskammer 8 bzw. durch Herausziehen aus der Prozesskammer 8 zwischen der Betriebsposition und der Nicht-Betriebsposition bewegbar. Die Prozesskammer 8 kann hierfür mit einer abdichtbaren Öffnung (nicht gezeigt) versehen sein, über welche das Diffusorelement 15 in die Prozesskammer 8 hinein und aus der Prozesskammer 8 heraus bewegt werden kann.

Ein bewegbar gelagertes Diffusorelement 15 kann gemeinsam mit wenigstens einer weiteren in wenigstens einem Bewegungsfreiheitsgrad bewegbar gelagerten Funktionskomponente der Vorrichtung 1, wie z. B. der Beschichtereinrichtung 7, bewegbar sein. Zwischen dem bewegbar gelagerten Diffusorelement 15 und der bewegbar gelagerten Funktionskomponente besteht in diesem Falle eine unmittelbare oder mittelbare, d. h. unter Zwischenschaltung wenigstens eines weiteren Bauteils realisierte, Bewegungskopplung.

Der Strömungseinrichtung 9 in einer horizontalen Ebene gegenüber liegend kann optional eine Absaugeinrichtung 11 angeordnet sein, welche dazu eingerichtet ist, die aus der Prozesskammer 8 abzuführende Fluidströmung 10 aus der Prozesskammer 8 abzusaugen. Die Absaugeinrichtung 11 ist demnach zur Erzeugung einer Saugströmung eingerichtet.

In den in den Fig. gezeigten Ausführungsbeispielen ist die Strömungseinrichtung 9 bzw. die optionale Absaugeinrichtung 11 außerhalb der Prozesskammer 8 angeordnet. Die Strömungseinrichtung 9 ist über geeignete Leitungselemente (nicht gezeigt) mit der Prozesskammer 8 verbunden, um innerhalb der Prozesskammer 8 die diese zumindest abschnittsweise durchströmende Fluidströmung 10 zu erzeugen. Die Absaugeinrichtung 11 ist ebenso über geeignete Leitungselemente (nicht gezeigt) mit der Prozesskammer 8 verbunden, um die Saugströmung zu erzeugen. Die Strömungseinrichtung 9 und/oder die Absaugeinrichtung 11 könnten prinzipiell auch innerhalb der Prozesskammer 8 angeordnet sein.

Die Vorrichtung 1 umfasst weiterhin eine Erfassungseinrichtung 12, welche zur Erfassung einer wenigstens einen physikalischen Parameter und/oder wenigstens einen chemischen Parameter der Fluidströmung 10 angebenden oder beschreibenden Strömungsinformation eingerichtet ist. Auf Grundlage erfasster Strömungsinformationen sind sonach unterschiedliche physikalische und/oder chemische Informationen über die Fluidströmung 10 erhältlich.

Die Strömungsinformation kann als physikalische Parameter der Fluidströmung 10 bzw. des Strömungsfluids insbesondere Dichte, Druck, Temperatur der Fluidströmung 10 bzw. des Strömungsfluids sowie diverse Strömungsparameter, d. h. insbesondere die Art der Strömung (zur Beurteilung der Frage, ob eine laminare oder turbulente Strömung vorliegt), die Strömungsgeschwindigkeit, das auf eine bestimmte Strömungs(querschnitts)fläche bezogene Strömungsprofil, beschreiben. Über die physikalischen Parameter lassen sich Rückschlüsse auf die Effizienz der Abführung der im Rahmen generativer Bauprozesse entstehenden Prozessgase aus der Prozesskammer 8 ziehen. Eine in ihrem Strömungsverlauf ansteigende Dichte oder Temperatur der Fluidströmung 10 bzw. des Strömungsfluids kann z. B. auf die Ansammlung entsprechender Prozessgase in dem Strömungsfluid und somit auf eine effiziente Abführung dieser aus der Prozesskammer 8 hinweisen.

Die Strömungsinformation kann als chemische Parameter der Fluidströmung 10 bzw. des Strömungsfluids insbesondere die anteilsmäßige chemische Zusammensetzung der Fluidströmung 10 bzw. des Strömungsfluids beschreiben. Über die chemischen Parameter lassen sich ebenso Rückschlüsse auf die Effizienz der Abführung der im Rahmen generativer Bauprozesse entstehenden Prozessgase aus der Prozesskammer 8 ziehen. Eine in ihrem Strömungsverlauf veränderliche anteilsmäßige chemische Zusammensetzung der Fluidströmung 10 bzw. des Strömungsfluids in Form einer Erhöhung des Anteils entsprechender Prozessgasbestandteile kann z. B. auf die Ansammlung entsprechender Prozessgase in der Fluidströmung 10 bzw. in dem Strömungsfluid und somit auf eine effiziente Abführung dieser aus der Prozesskammer 8 hinweisen.

Die Erfassungseinrichtung 12 ist im Hinblick auf die über diese jeweils zu erfassenden physikalischen und/oder chemischen Parameter der Fluidströmung mit geeigneten, insbesondere (mess)sondenartigen, Erfassungselementen 12a ausgestattet. Im Hinblick auf die erfassbaren bzw. zu erfassenden Parameter handelt es sich bei entsprechenden Erfassungselementen 12a grundsätzlich um an sich bekannte Messelemente bzw. Messelementgruppen oder -anordnungen; die Erfassung der Temperatur der Fluidströmung 10 bzw. des Strömungsfluids kann z. B. vermittels an sich bekannter Temperaturmesselemente, die Erfassung der Strömungsgeschwindigkeit der Fluidströmung 10 bzw. des Strömungsfluids z. B. vermittels an sich bekannter mechanischer oder optischer Erfassungselemente 12a, z. B. als Bestandteil einer Durchflussmesseinrichtung, einer Laser-Doppler-Anemometrie-Einrichtung, einer Radareinrichtung, einer Ultraschalleinrichtung, etc., erfolgen.

In dem in den Fig. gezeigten Ausführungsbeispielen sind die Erfassungselemente 12a in der Prozesskammer 8 angeordnet. Je nach funktionellem bzw. konstruktivem Aufbau können die Erfassungselemente 12a zumindest abschnittsweise unmittelbar in die Fluidströmung 10 geschaltet sein, sodass die Fluidströmung 10 diese zumindest abschnittsweise unmittelbar umströmt.

Die Erfassungselemente 12a können in wenigstens einem Bewegungsfreiheitsgrad bewegbar gelagert sein. Die Erfassungselemente 12a können z. B. zwischen einer ersten Position innerhalb der Prozesskammer 8, bei welcher Position es sich um eine Betriebsposition, in welcher eine Erfassung entsprechender Parameter der Fluidströmung 10 möglich ist, handeln kann, und wenigstens einer weiteren Position innerhalb der Prozesskammer 8, bei welcher es sich (ebenso) um eine Betriebsposition, in welcher eine Erfassung entsprechender Parameter der Fluidströmung 10 möglich ist, oder um eine Nicht-Betriebsposition, in welcher eine Erfassung entsprechender Parameter der Fluidströmung 10 nicht möglich ist, handeln kann, bewegbar gelagert sein. Alternativ oder ergänzend ist es denkbar, dass die Erfassungselemente 12a zwischen einer ersten Position innerhalb der Prozesskammer 8, bei welcher Position es sich um eine Betriebsposition, in welcher eine Erfassung entsprechender Parameter der Fluidströmung 10 möglich ist, handeln kann, und einer weiteren Position außerhalb der Prozesskammer 8, bei welcher Position es sich um eine Nicht-Betriebsposition, in welcher eine Erfassung entsprechender Parameter der Fluidströmung 10 nicht möglich ist, handeln kann, bewegbar gelagert sind. Durch eine bewegbare Lagerung der Erfassungselemente 12a ist es möglich, entsprechende Parameter der Fluidströmung 10 bzw. des Strömungsfluids an unterschiedlichen Stellen innerhalb der Prozesskammer zu erfassen. Derart lässt sich z. B. eine orts- und/oder zeitaufgelöste Erfassung bzw. Beurteilung entsprechender Parameter, d. h. insbesondere auch orts- und/oder zeitaufgelöste Veränderungen jeweils erfasster Parameter, darstellen.

Analog einem bewegbar gelagerte Diffusorelement 15 kann auch ein bewegbar gelagertes Erfassungselement 12a gemeinsam mit wenigstens einer weiteren in wenigstens einem Bewegungsfreiheitsgrad bewegbar gelagerten Funktionskomponente der Vorrichtung 1, wie z. B. der Beschichtereinrichtung 7, bewegbar sein. Zwischen dem bewegbar gelagerten Erfassungselement 12a und der bewegbar gelagerten Funktionskomponente besteht in diesem Falle eine unmittelbare oder mittelbare, d. h. unter Zwischenschaltung wenigstens eines weiteren Bauteils realisierte, Bewegungskopplung.

In jedem Fall ist durch die Erfassungseinrichtung 12 eine quantitative und/oder qualitative Beurteilung der Abführung entsprechender Prozessgase aus der Prozesskammer 8 möglich. Auf Grundlage der Strömungsinformation kann bedarfsgerecht eine manuelle, teil- oder vollautomatisierte Anpassung diverser Parameter der Fluidströmung 10 respektive eine Anpassung des Betriebs der Strömungseinrichtung 9, gegebenenfalls auch des Betriebs der Absaugeinrichtung 11, sofern vorhanden, erfolgen. Insbesondere kann ein Regel- oder Steuerkreis implementiert werden, über welchen die Abführung entsprechender Prozessgase aus der Prozesskammer 8 im Hinblick auf eine vorgebbare oder vorgegebene Regel- oder Steuergröße geregelt bzw. gesteuert wird.

Die Implementierung eines entsprechenden Regel- oder Steuerkreises erfolgt über eine mit der Erfassungseinrichtung 12 kommunizierende Steuereinrichtung 13. Die Steuereinrichtung 13 umfasst geeignete hard- und/oder softwaremäßig implementierte Steuermittel (nicht gezeigt), d. h. z. B. Steueralgorithmen, vermittels welchen eine entsprechende Verarbeitung der Strömungsinformation und eine Erzeugung entsprechender Steuerinformationen auf Grundlage welcher die Abführung entsprechender Prozessgase aus der Prozesskammer 8 im Hinblick auf eine vorgebbare oder vorgegebene Regel- oder Steuergröße geregelt bzw. gesteuert wird, möglich ist.

Die Steuereinrichtung 13 ist datenmäßig mit einer Ausgabeeinrichtung 14 zur Ausgabe einer Visualisierungsinformation, welche die erfassten Strömungsinformationen visualisiert, verbunden. Die Erzeugung einer entsprechenden Visualisierungsinformation kann in der Steuereinrichtung 13 oder in der Ausgabeeinrichtung 14 erfolgen, welche hierfür jeweils mit geeigneten hard- und/oder softwaremäßigen Mitteln ausgestattet sind. Erfasste Strömungsinformationen können über die Ausgabeeinrichtung 14, welche z. B. als ein Display ausgebildet ist oder ein solches umfasst, ausgegeben und einem Benutzer der Vorrichtung 1 zur Anzeige gebracht werden. Die Visualisierungsinformation kann ein graphisches, insbesondere farbiges, Abbild erfasster physikalischer und/oder chemischer Parameter beinhalten. Veränderungen erfasster physikalischer und/oder chemischer Parameter können graphisch, insbesondere farbig, dargestellt werden. Die Darstellung von Veränderungen erfasster physikalischer und/oder chemischer Parameter kann ähnlich einem aus Wetterprognosen bekannten "Regen- oder Wetterradar" realisiert sein. Eine Visualisierung kann grundsätzlich z. B. derart erfolgen, dass die (Strömung der) Fluidströmung 10 durch die Prozesskammer 8, gegebenenfalls mit graphisch hervorgehobenem veränderlichem Prozessgasanteil, dargestellt wird.

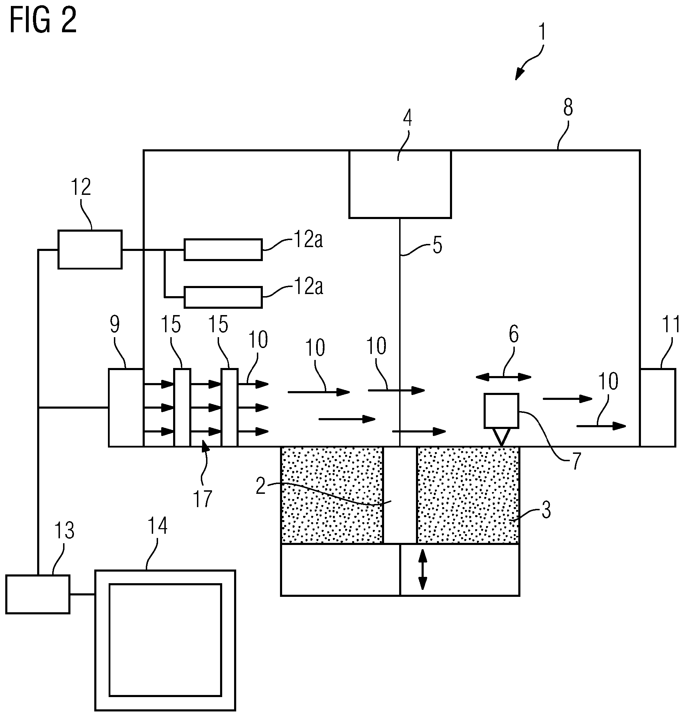

Fig. 2 zeigt eine Prinzipdarstellung einer Vorrichtung 1 gemäß einem weiteren Ausführungsbeispiel. Im Unterschied zu dem in Fig. 1 gezeigten Ausführungsbeispiel sind in dem in Fig. 2 gezeigten Ausführungsbeispiel mehrere Diffusorelemente 15 vorhanden. Die Diffusorelemente 15 sind in Reihe geschaltet hintereinander angeordnet. Zwischen zwei unmittelbar benachbart angeordneten Diffusorelementen 15 ist ein Strömungsraum 17 gebildet. Durch geeignete Beabstandung der Diffusorelemente 15 lassen sich unterschiedlich dimensionierte Strömungsräume 17 bilden. Über die Dimensionierung der Strömungsräume 17 kann Einfluss auf diverse Strömungsparameter, d. h. insbesondere die Art der Strömung, der Fluidströmung 10 genommen werden.

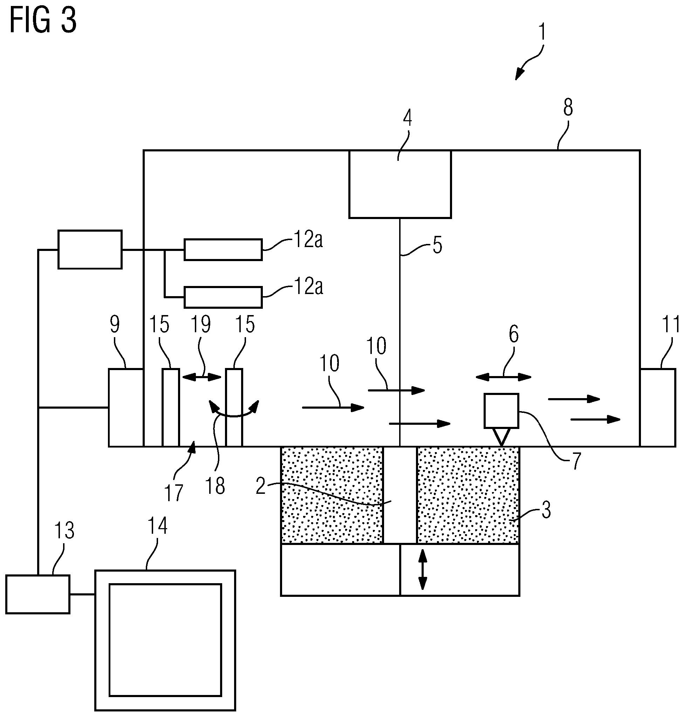

Die Fig. 3, 4 zeigen eine Prinzipdarstellung einer Vorrichtung 1 gemäß einem weiteren Ausführungsbeispiel. In dem in den Fig. 3, 4 gezeigten Ausführungsbeispiel ist gezeigt, dass wenigstens ein Diffusorelement 15 in wenigstens einem Bewegungsfreiheitsgrad relativ zu wenigstens einem weiteren Diffusorelement 15 bewegbar gelagert sein kann, wodurch der zwischen unmittelbar benachbart angeordneten Diffusorelementen 15 gebildete Strömungsraum 17 in seiner Dimensionierung, insbesondere in seinem Volumen, veränderbar ist. Wie erwähnt, kann über die Dimensionierung eines Strömungsraums 17 Einfluss auf diverse Strömungsparameter, d. h. insbesondere die Art der Strömung, der Fluidströmung 10 genommen werden.

Anhand der in Fig. 3 gezeigten Doppelpfeile 18, 19 ist ersichtlich, dass Bewegungen eines Diffusorelements 15 sowohl translatorische als auch rotatorische Bewegungsfreiheitsgrade umfassen können. Kombinierte Bewegungen in unterschiedlichen Bewegungsfreiheitsgraden sind möglich. Die bewegbare Lagerung eines Diffusorelements 15 kann, wie erwähnt, durch einen, z. B. (elektro)motorischen, Bewegungsantrieb, vermittels welchem das Diffusorelement 15 in wenigstens einem Bewegungsfreiheitsgrad bewegbar ist, realisiert sein. Zur Realisierung entlang einer bestimmten Bewegungsbahn geführter Bewegungen eines Diffusorelements 15 kann, wie erwähnt, eine geeignete, d. h. z. B. rollen- und/oder schienenartige, Führungselemente (nicht gezeigt) umfassende Führungseinrichtung (nicht gezeigt) vorhanden sein. Insbesondere für den in dem in Fig. 3, 4 gezeigten Ausführungsbeispiel gezeigten Fall von eine plattenartige bzw. -förmige geometrische Grundform aufweisenden Diffusorelementen 15 ist es denkbar, ein Diffusorelement 15 um eine vertikale Achse rotierbar bzw. schwenkbar zu lagern, sodass es zwischen einer Betriebsposition (vgl. Fig. 3), in welcher entsprechende Strömungsöffnungen 16 in Strömungsrichtung der Fluidströmung 10 ausgerichtet sind und eine Vergleichmäßigung der Fluidströmung 10 möglich ist, und einer Nicht-Betriebsposition (vgl. Fig. 4), in welcher entsprechende Strömungsöffnungen 16 nicht in Strömungsrichtung der Fluidströmung 10 ausgerichtet sind und eine Vergleichmäßigung der Fluidströmung 10 nicht möglich ist, verdrehbar bzw. verschwenkbar ist. In dem in den Fig. 3, 4 gezeigten Ausführungsbeispiel ist das rechte Diffusorelement 15 um eine vertikale Achse rotierbar bzw. schwenkbar gelagert.

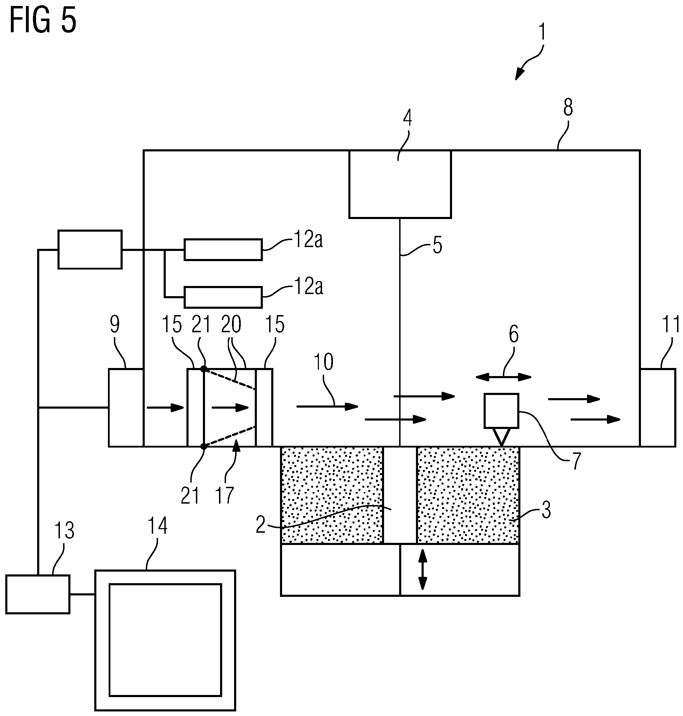

Fig. 5 zeigt eine Prinzipdarstellung einer Vorrichtung 1 gemäß einem weiteren Ausführungsbeispiel. Anhand des in Fig. 5 gezeigten Ausführungsbeispiels ist ersichtlich, dass ein Strömungsraum 17 neben entsprechenden unmittelbar benachbart angeordneten Diffusorelementen 15 ferner durch sich zwischen zwei unmittelbar benachbart angeordneten Diffusorelementen 15 (im Wesentlichen horizontal) erstreckende Wandungselemente 20 begrenzt sein kann. Entsprechende sich zwischen jeweiligen Diffusorelementen 15 erstreckend angeordnete oder ausgebildete Wandungselemente 20 dienen der weiteren räumlichen Begrenzung jeweiliger Strömungsräume 17.

Die Wandungselemente 20 können in wenigstens einem Bewegungsfreiheitsgrad bewegbar relativ zueinander und/oder relativ zu wenigstens einem Diffusorelement 15 gelagert sein. In dem in Fig. 5 gezeigten Ausführungsbeispiel sind die Wandungselemente 20 um eine horizontale Kipp- bzw. Schwenkachse kipp- bzw. schwenkbar gelagert. Die Wandungselemente 20 sind hierfür kipp- bzw. schwenkbar an Anlenkpunkten 21 eines, d. h. des linken, Diffusorelements 15 angelenkt. Die Wandungselemente 20 können an dem diesem Diffusorelement 15 nachgeschalteten Diffusorelement 15 vertikal geführt sein. Wie strichliert dargestellt, können durch entsprechende Kipp- bzw. Schwenkbewegungen des Wandlungselements 20 trichterförmig verlaufende Strömungsräume 17 ausgebildet werden. Über sich trichterförmig erweiternde oder reduzierende Strömungsräume 17 lässt sich gezielt Einfluss auf diverse Strömungsparameter der Fluidströmung 10, insbesondere die Art der Strömung und die Strömungsgeschwindigkeit, nehmen.

Für alle Ausführungsbeispiele gilt, dass die Steuereinrichtung 13 auch zur Regelung bzw. Steuerung von Bewegungen bewegbar gelagerter Diffusorelemente 15 und/oder zur Steuerung von Bewegungen bewegbar gelagerter Erfassungselemente 12a und/oder zur Steuerung von Bewegungen bewegbar gelagerter Wandungselemente 20, insbesondere in Abhängigkeit der erfassten Strömungsinformation, eingerichtet sein kann.

Mit den in den Fig. gezeigten Vorrichtungen 1 lässt sich ein Verfahren zur generativen Herstellung wenigstens eines Objekts 2 durch sukzessive schichtweise selektive Verfestigung einzelner Baumaterialschichten aus verfestigbarem Baumaterial 3 vermittels eines Energiestrahls 5 implementieren. Das Verfahren zeichnet sich insbesondere dadurch aus, dass vermittels der Erfassungseinrichtung 12 entsprechende Strömungsinformationen erfasst werden.

### BEZUGSZEICHENLISTE

- 1: Vorrichtung
- 2: Objekt
- 3: Baumaterial
- 4: Energiestrahlerzeugungseinrichtung
- 5: Energiestrahl
- 6: Doppelpfeil
- 7: Beschichtereinrichtung
- 8: Prozesskammer
- 9: Strömungseinrichtung
- 10: Pfeil (Fluidströmung)
- 11: Absaugeinrichtung
- 12: Erfassungseinrichtung
- 12a: Erfassungselement
- 13: Steuereinrichtung
- 14: Ausgabeeinrichtung
- 15: Diffusorelement
- 16: Strömungsöffnung
- 17: Strömungsraum
- 18: Doppelpfeil
- 19: Doppelpfeil
- 20: Wandungselement
- 21: Anlenkpunkt

## Patentansprüche

1. Vorrichtung (1) zur generativen Herstellung eines dreidimensionalen Objekts (2) durch sukzessive schichtweise selektive Verfestigung von Baumaterialschichten aus verfestigbarem Baumaterial (3) vermittels wenigstens eines Laserstrahls (5), umfassend wenigstens eine Einrichtung (4) zur Erzeugung wenigstens eines Laserstrahls (5) zur schichtweisen selektiven Verfestigung einzelner Baumaterialschichten aus verfestigbarem Baumaterial (3), und eine Strömungseinrichtung (9) zur Erzeugung einer eine Prozesskammer (8) der Vorrichtung (1) zumindest abschnittsweise durchströmenden Fluidströmung (10), wobei die Vorrichtung (1) eine Erfassungseinrichtung (12) zur Erfassung einer wenigstens einen physikalischen Parameter und/oder wenigstens einen chemischen Parameter der Fluidströmung (10) beschreibenden Strömungsinformation aufweist, **gekennzeichnet durch** wenigstens ein der Strömungseinrichtung (9) zuordenbares oder zugeordnetes, mehrere von einem Strömungsfluid durchströmbare Strömungsöffnungen (16) aufweisendes Diffusorelement (15) zur Erzeugung eines gleichmäßigen, insbesondere laminaren, Strömungsprofils der Fluidströmung (10), wobei das wenigstens eine Diffusorelement (15) in wenigstens einem Bewegungsfreiheitsgrad bewegbar gelagert ist.

2. Vorrichtung nach Anspruch 1, **dadurch gekennzeichnet, dass** die Erfassungseinrichtung (12) wenigstens ein, insbesondere sondenartiges, Erfassungselement (12a) umfasst, welches in der Prozesskammer (8) anordenbar oder angeordnet ist.

3. Vorrichtung nach Anspruch 2, **dadurch gekennzeichnet, dass** das wenigstens eine Erfassungselement (12a) in wenigstens einem Bewegungsfreiheitsgrad, insbesondere zwischen einer ersten Position innerhalb der Prozesskammer (8) und wenigstens einer weiteren Position innerhalb der Prozesskammer (8) und/oder einer weiteren Position außerhalb der Prozesskammer (8), bewegbar gelagert ist.

4. Vorrichtung nach Anspruch 3, **dadurch gekennzeichnet, dass** das wenigstens eine bewegbar gelagerte Erfassungselement (12a) gemeinsam mit wenigstens einer weiteren in wenigstens einem Bewegungsfreiheitsgrad bewegbar gelagerten Funktionskomponente der Vorrichtung (1), insbesondere einer Beschichtereinrichtung (7), bewegbar ist.

5. Vorrichtung nach einem der vorhergehenden Ansprüche, **gekennzeichnet durch** wenigstens ein der Strömungseinrichtung (9) zuordenbares oder zugeordnetes, mehrere von einem Strömungsfluid durchströmbare Strömungsöffnungen (16) aufweisendes Diffusorelement (15) zur Erzeugung eines gleichmäßigen, insbesondere laminaren, Strömungsprofils der Fluidströmung (10), wobei die Strömungsöffnungen (16) wabenartig ausgebildet und/oder angeordnet sind.

6. Vorrichtung nach einem der vorangehenden Ansprüche, **dadurch gekennzeichnet, dass** das wenigstens eine Diffusorelement (15) zwischen einer Position innerhalb der Prozesskammer (8), bei welcher Position es sich um eine Betriebsposition, in welcher eine Vergleichmäßigung der Fluidströmung (10) durch das Diffusorelement (15) möglich ist, handelt, und einer Position außerhalb oder innerhalb der Prozesskammer (8), bei welcher Position es sich um eine Nicht-Betriebsposition, in welcher eine Vergleichmäßigung der Fluidströmung (10) durch das Diffusorelement (15) nicht möglich ist, handelt, bewegbar gelagert ist.

7. Vorrichtung nach einem der vorhergehenden Ansprüche, **gekennzeichnet durch** mehrere von einem Strömungsfluid durchströmbare Strömungsöffnungen (16) aufweisende Diffusorelemente (15) zur Erzeugung eines gleichmäßigen oder vergleichmäßigten, insbesondere laminaren, Strömungsprofils der Fluidströmung (10), wobei die Diffusorelemente (15) hintereinander geschaltet angeordnet sind, wobei zwischen unmittelbar benachbart angeordneten Diffusorelementen (15) ein Strömungsraum (17) gebildet ist.

8. Vorrichtung nach Anspruch 7, **dadurch gekennzeichnet, dass** wenigstens ein Diffusorelement (15) in wenigstens einem Bewegungsfreiheitsgrad relativ zu wenigstens einem weiteren Diffusorelement (15) bewegbar gelagert ist, wodurch der zwischen unmittelbar benachbart angeordneten Diffusorelementen (15) gebildete Strömungsraum (17) in seinem Volumen veränderbar ist.

9. Vorrichtung nach Anspruch 7 oder 8, **dadurch gekennzeichnet, dass** der Strömungsraum (17) durch sich zwischen zwei unmittelbar benachbart angeordneten Diffusorelementen (15) erstreckende Wandungselemente (20) begrenzt ist, wobei die Wandungselemente (20) in wenigstens einem Bewegungsfreiheitsgrad bewegbar relativ zueinander und/oder relativ zu wenigstens einem Diffusorelement (15) gelagert sind.

10. Vorrichtung nach einem der vorhergehenden Ansprüche, **gekennzeichnet durch** eine Ausgabeeinrichtung (14) zur, insbesondere optischen, Ausgabe wenigstens einer die über die Erfassungseinrichtung (12) erfassten Strömungsinformationen visualisierenden Visualisierungsinformation.

11. Vorrichtung nach einem der vorhergehenden Ansprüche, **gekennzeichnet durch** eine Steuereinrichtung (13) zur Steuerung der über die Strömungseinrichtung (9) erzeugbaren oder erzeugten Fluidströmung (10), wobei die Steuereinrichtung (13) zur Steuerung des Betriebs der Strömungseinrichtung (9), insbesondere wenigstens eines Strömungsparameters und/oder der anteilsmäßigen Zusammensetzung, der Fluidströmung (10) und/oder zur Steuerung von Bewegungen bewegbar gelagerter Erfassungselemente (12a) und/oder zur Steuerung von Bewegungen bewegbar gelagerter Diffusorelemente (15) und/oder zur Steuerung von Bewegungen bewegbar gelagerter Wandungselemente (20) in Abhängigkeit der erfassten Strömungsinformation eingerichtet ist.

12. Verfahren zur generativen Herstellung wenigstens eines dreidimensionalen Objekts (2) durch sukzessive schichtweise selektive Verfestigung einzelner Baumaterialschichten aus verfestigbarem Baumaterial (3) vermittels eines Energiestrahls (5), **dadurch gekennzeichnet, dass** zur generativen Herstellung des wenigstens einen dreidimensionalen Objekts (2) eine Vorrichtung (1) zur generativen Herstellung wenigstens eines dreidimensionalen Objekts (2) nach einem der vorhergehenden Ansprüche verwendet wird.

## Claims

1. Apparatus (1) for generative manufacture of a three-dimensional object (2) by successive, layer-by-layer selective solidification of construction material layers of solidifiable construction material (3) by means of at least one laser beam (5), comprising at least one device (4) for generating at least one laser beam (5) for layer-by-layer selective solidification of individual construction material layers of solidifiable construction material (3), and a flow device (9) for generating a fluid flow (10) that flows through a process chamber (8) of the apparatus (1) at least in sections, wherein the apparatus (1) comprises an acquisition device (12) for acquiring an item of flow information that describes at least one physical parameter and/or at least one chemical parameter of the fluid flow (10), **characterised by** at least one diffusor element (15) which can be or is associated with the flow element (9), comprises a plurality of flow openings (16) through which a flow fluid can flow, and is intended for generating a homogeneous, in particular laminar, flow profile of the fluid flow (10), wherein the at least one diffusor element (15) is mounted so as to be movable in at least one degree of freedom of movement.

2. Apparatus according to claim 1, **characterised in that** the acquisition device (12) comprises an in particular probe-type of acquisition element (12a) which can be arranged or is arranged in the process chamber (8).

3. Apparatus according to claim 2, **characterised in that** the at least one acquisition element (12a) is mounted so as to be movable in at least one degree of freedom of movement, in particular between a first position inside the process chamber (8) and at least one further position inside the process chamber (8) and/or a further position outside the process chamber (8).

4. Apparatus according to claim 3, **characterised in that** the at least one movably mounted acquisition element (12a) is movable together with at least one further functional component of the apparatus (1), in particular a coater device (7), which is mounted so as to be movable in at least one degree of freedom of movement.

5. Apparatus according to any of the preceding claims, **characterised by** at least one diffusor element (15) which can be or is associated with the flow element (9), comprises a plurality of flow openings (16) through which a flow fluid can flow, and is intended for generating a homogeneous, in particular laminar, flow profile of the fluid flow (10), wherein the flow openings (16) are designed and/or arranged in a honeycombed manner.

6. Apparatus according to any of the preceding claims, **characterised in that** at least one diffusor element (15) is mounted so as to be movable between a position inside the process chamber (8), which position is an operating position in which it is possible to homogenise the fluid flow (10) by means of the diffusor element (15), and a position outside or inside the process chamber (8), which position is a non-operating position in which it is not possible to homogenise the fluid flow (10) by means of the diffusor element (15).

7. Apparatus according to any of the preceding claims, **characterised by** a plurality of diffusor elements (15) which comprise flow openings (16) through which a flow fluid can flow, which diffusor elements are intended for generating a homogeneous or homogenised, in particular laminar, flow profile of the fluid flow (10), wherein the diffusor elements (15) are arranged so as to be connected one behind the other, wherein a flow space (17) is formed between diffusor elements (15) that are arranged so as to be directly adjacent.

8. Apparatus according to claim 7, **characterised in that** at least one diffusor element (15) is mounted so as to be movable in at least one degree of freedom of movement, relative to at least one further diffusor element (15), as a result of which the volume of the flow space (17) formed between directly adjacent diffusor elements (15) is variable.

9. Apparatus according to claim 7 or 8, **characterised in that** the flow space (17) is delimited by wall elements (20) extending between two directly adjacent diffusor elements (15), wherein the wall elements (20) are mounted so as to be movable relative to one another and/or relative to at least one diffusor element (15), in at least one degree of freedom of movement.

10. Apparatus according to any of the preceding claims, **characterised by** an output device (14) for in particular optically outputting at least one item of visualisation information which visualises the flow information acquired by the acquisition device (12).

11. Apparatus according to any of the preceding claims, **characterised by** a control means (13) for controlling the fluid flow (10) which can be or is generated via the flow device (9), wherein the control means (13) is configured to control the operation of the flow device (9), in particular at least one flow parameter and/or the proportional composition of the fluid flow (10), and/or to control movements of movably mounted acquisition elements (12a), and/or to control movements of movably mounted diffusor elements (15), and/or to control movements of movably mounted wall elements (20) depending on the acquired flow information.

12. Method for generative manufacture of at least one three-dimensional object (2) by means of successive, layer-by-layer selective solidification of individual construction material layers of solidifiable construction material (3) by means of an energy beam (5), **characterised in that** an apparatus (1) for generative manufacture of at least one three-dimensional object (2) according to any of the preceding claims is used for the generative manufacture of the at least one three-dimensional object (2).

## Revendications

1. Dispositif (1) pour la fabrication générative d'un objet (2) tridimensionnel par solidification sélective par couches successive de couches de matériau de construction composées d'un matériau de construction (3) pouvant être solidifié au moyen d'au moins un faisceau laser (5), comprenant au moins un système (4) pour générer au moins un faisceau laser (5) pour solidifier de manière sélective par couches diverses couches de matériau de construction composées d'un matériau de construction (3) pouvant être solidifié, et un système d'écoulement (9) pour générer un écoulement de fluide (10) traversant au moins par endroits une chambre de processus (8) du dispositif (1), dans lequel le dispositif (1) présente un système de détection (12) pour détecter une information d'écoulement décrivant au moins un paramètre physique et/ou au moins un paramètre chimique de l'écoulement de fluide (10), **caractérisé par** au moins un élément diffuseur (15) pouvant être associé ou associé au système d'écoulement (9), présentant plusieurs ouvertures d'écoulement (16) pouvant être traversées par un fluide d'écoulement, pour générer un profil d'écoulement, homogène, en particulier laminaire, de l'écoulement de fluide (10), dans lequel l'au moins un élément diffuseur (15) est monté de manière à pouvoir être déplacé selon au moins un degré de liberté de mouvement.

2. Dispositif selon la revendication 1, **caractérisé en ce que** le système de détection (12) comprend au moins un élément de détection (12a) en particulier de type sonde, lequel peut être disposé ou est disposé dans la chambre de processus (8).

3. Dispositif selon la revendication 2, **caractérisé en ce que** l'au moins un élément de détection (12a) est monté de manière à pouvoir être déplacé selon au moins un degré de liberté de mouvement, en particulier entre une première position à l'intérieur de la chambre de processus (8) et au moins une autre position à l'intérieur de la chambre de processus (8) et/ou une autre position à l'extérieur de la chambre de processus (8).

4. Dispositif selon la revendication 3, **caractérisé en ce que** l'au moins un élément de détection (12a) monté de manière à pouvoir être déplacé peut être déplacé conjointement avec au moins un autre composant fonctionnel, monté de manière à pouvoir être déplacé selon au moins un degré de liberté de mouvement, du dispositif (1), en particulier un système de revêtement (7).

5. Dispositif selon l'une quelconque des revendications précédentes, **caractérisé par** au moins un élément diffuseur (15) pouvant être associé ou associé au système d'écoulement (9), présentant plusieurs ouvertures d'écoulement (16) pouvant être traversées par un fluide d'écoulement, pour générer un profil d'écoulement homogène, en particulier laminaire, de l'écoulement de fluide (10), dans lequel les ouvertures d'écoulement (16) sont réalisées et/ou sont disposées à la manière d'alvéoles.

6. Dispositif selon l'une quelconque des revendications précédentes, **caractérisé en ce que** l'au moins un élément diffuseur (15) est monté de manière à pouvoir être déplacé entre une position à l'intérieur de la chambre de processus (8), laquelle position est une position de fonctionnement dans laquelle une homogénéisation de l'écoulement de fluide (10) à travers l'élément diffuseur (15) est possible, et une position à l'extérieur ou à l'intérieur de la chambre de processus (8), laquelle position est une position de non-fonctionnement dans laquelle une homogénéisation de l'écoulement de fluide (10) à travers l'élément diffuseur (15) n'est pas possible.

7. Dispositif selon l'une quelconque des revendications précédentes, **caractérisé par** plusieurs éléments diffuseurs (15) présentant plusieurs ouvertures d'écoulement (16) pouvant être traversées par un fluide d'écoulement, pour générer un profil d'écoulement homogène ou homogénéisé, en particulier laminaire, de l'écoulement de fluide (10), dans lequel les éléments diffuseurs (15) sont disposés de manière branchée les uns derrière les autres, dans lequel un espace d'écoulement (17) est formé entre des éléments diffuseurs (15) disposés directement de manière adjacente.

8. Dispositif selon la revendication 7, **caractérisé en ce qu'**au moins un élément diffuseur (15) est monté de manière à pouvoir être déplacé selon au moins un degré de liberté de mouvement par rapport à au moins un autre élément diffuseur (15) ce qui permet de modifier dans son volume l'espace d'écoulement (17) formé entre des éléments diffuseurs (15) disposés directement de manière adjacente.

9. Dispositif selon la revendication 7 ou 8, **caractérisé en ce que** l'espace d'écoulement (17) est délimité par des éléments de paroi (20) s'étendant entre deux éléments diffuseurs (15) disposés directement de manière adjacente, dans lequel les éléments de paroi (20) sont montés de manière à pouvoir être déplacés selon au moins un degré de liberté de mouvement les uns par rapport aux autres et/ou par rapport à au moins un élément diffuseur (15).

10. Dispositif selon l'une quelconque des revendications précédentes, **caractérisé par** un système de distribution (14), pour distribuer, en particulier de manière optique, au moins une information de visualisation visualisant les informations d'écoulement détectées par l'intermédiaire du système de détection (12).

11. Dispositif selon l'une quelconque des revendications précédentes, **caractérisé par** un système de commande (13) pour commander l'écoulement de fluide (10) pouvant être généré ou généré par l'intermédiaire du système d'écoulement (9), dans lequel le système de commande (13) est mis au point pour commander le fonctionnement du système d'écoulement (9), en particulier au moins un paramètre d'écoulement et/ou la composition proportionnelle de l'écoulement de fluide (10) et/ou pour commander des déplacements d'éléments de détection (12a) montés de manière à pouvoir être déplacés et/ou pour commander des déplacements d'éléments diffuseurs (15) montés de manière à pouvoir être déplacés et/ou pour commander des déplacements d'éléments de paroi (20) montés de manière à pouvoir être déplacés en fonction de l'information d'écoulement détectée.

12. Procédé pour la fabrication générative d'au moins un objet (2) tridimensionnel par solidification sélective par couches successive de diverses couches de matériau de construction composées d'un matériau de construction (3) pouvant être solidifié au moyen d'un faisceau d'énergie (5), **caractérisé en ce qu'**est utilisé pour fabriquer de manière générative l'au moins un objet (2) tridimensionnel un dispositif (1) pour la fabrication générative d'au moins un objet (2) tridimensionnel selon l'une quelconque des revendications précédentes.
